(19) Europäisches Patentamt / European Patent Office / Office européen des brevets

(11) **EP 2 962 375 B1**

(12) **FASCICULE DE BREVET EUROPEEN**

(45) Date de publication et mention
de la délivrance du brevet:
**15.04.2020 Bulletin 2020/16**

(21) Numéro de dépôt: **14707982.6**

(22) Date de dépôt: **27.02.2014**

(51) Int Cl.:
*H02J 1/12* (2006.01)          *H02M 7/00* (2006.01)
*H02M 7/08* (2006.01)          *H02M 7/17* (2006.01)

(86) Numéro de dépôt international:
**PCT/EP2014/053794**

(87) Numéro de publication internationale:
**WO 2014/131817 (04.09.2014 Gazette 2014/36)**

(54) **CONVERTISSEUR DE PUISSANCE COMPORTANT UNE ARCHITECTURE DE BRAS NON-ALIGNES**

LEISTUNGSWANDLER MIT EINER ARCHITEKTUR MIT NICHT AUSGERICHTETEN ARMEN

POWER CONVERTER COMPRISING AN ARCHITECTURE HAVING NONALIGNED ARMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2013 FR 1351819**

(43) Date de publication de la demande:
**06.01.2016 Bulletin 2016/01**

(73) Titulaire: **General Electric Technology GmbH 5400 Baden (CH)**

(72) Inventeurs:
 • **JOSSE, Philippe**
   **F-75014 Paris (FR)**
 • **DEVAUTOUR, Joël**
   **F-78230 Le Pecq (FR)**

(74) Mandataire: **Brevalex
95, rue d'Amsterdam
75378 Paris Cedex 8 (FR)**

(56) Documents cités:
   **WO-A1-2012/089751     FR-A1- 2 967 317**

 • **J-L SCHANEN ET AL: "Impact of the Physical Layout of High-Current Rectifiers on Current Division and Magnetic Field Using PEEC Method", IEEE TRANSACTIONS ON INDUSTRY APPLICATIONS, IEEE SERVICE CENTER, PISCATAWAY, NJ, US, vol. 46, no. 2, 1 mars 2010 (2010-03-01), pages 892-900, XP011301038, ISSN: 0093-9994**
 • **SYED M PEERAN ET AL: "Current Balance in Parallel Power Diodes in Three-Phase Rectifiers", IEEE TRANSACTIONS ON INDUSTRY APPLICATIONS, IEEE SERVICE CENTER, PISCATAWAY, NJ, US, vol. 43, no. 3, 1 mai 1987 (1987-05-01), pages 567-572, XP011213791, ISSN: 0093-9994**

**Description**

**DOMAINE TECHNIQUE**

La présente invention se rapporte au domaine des convertisseurs de forte puissance, et notamment à l'architecture des redresseurs de forte puissance dans l'électrolyse, en particulier pour l'électrolyse de l'aluminium.
L'invention concerne plus particulièrement un convertisseur de puissance comportant des bras non-alignés et un circuit convertisseur de forte puissance comportant un tel convertisseur de puissance.

**ÉTAT DE LA TECHNIQUE ANTÉRIEURE**

Dans le domaine de l'électronique de puissance, les convertisseurs de forte puissance pour l'électrolyse sont typiquement des redresseurs qui assurent directement la conversion d'une source de courant alternatif en une source de courant continu.
De tels redresseurs peuvent présenter une forte puissance de l'ordre d'une centaine de méga Voltampères (MVA) et délivrer des courants électriques allant par exemple jusqu'à 110 kA. Ces redresseurs peuvent être de technologie à diodes, encore appelés redresseurs non contrôlés, ou de technologie à thyristors, encore appelés redresseurs contrôlés.
Ces redresseurs peuvent notamment permettre la production d'aluminium par un processus de réduction électrolytique, voire encore la production de métaux non ferreux comme le zinc, le cuivre ou le chlore. Ces redresseurs peuvent également être utilisés pour alimenter autre chose que des cuves d'électrolyse, notamment pour d'autres procédés électro-intensifs nécessitant des alimentations continues de forte puissance, par exemple des fours électriques à arc ou des générateurs de plasma.

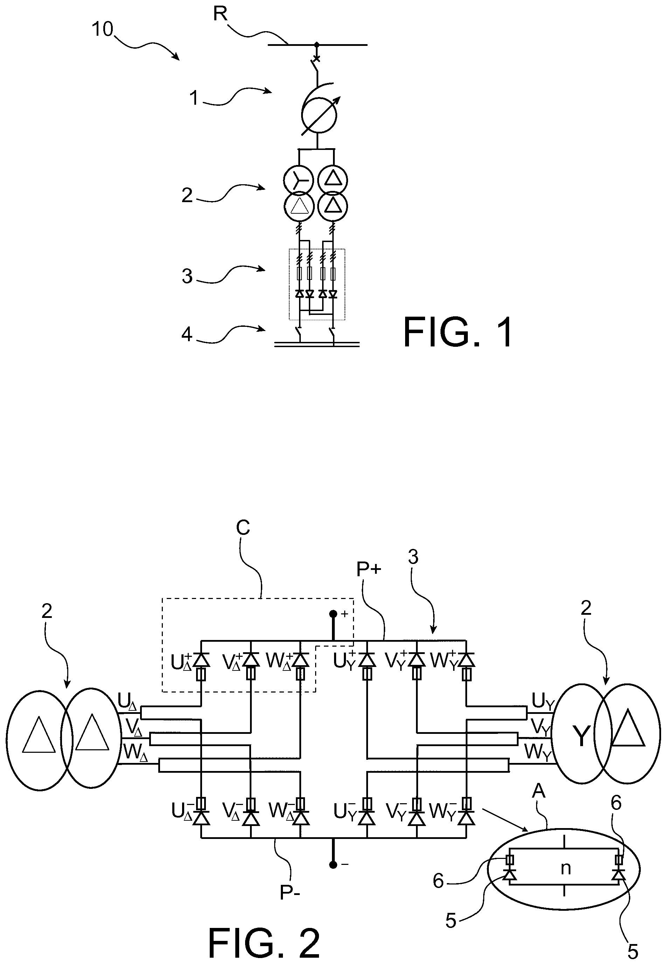

La figure 1 représente un schéma électrique simplifié d'un circuit convertisseur 10 que l'on retrouve classiquement dans une installation d'usine d'électrolyse pour permettre l'alimentation en courant électrique de cuves d'électrolyse. L'alimentation en courant électrique est constituée d'une mise en parallèle de plusieurs alimentations décrites ci-après, appelées communément « groupes ».
Le circuit redresseur 10 reçoit un courant alternatif depuis le réseau d'électricité R haute tension alternatif triphasé. Le circuit redresseur 10 comporte, à partir du réseau alternatif triphasé R, un premier groupe 1 comportant un transformateur de réglage triphasé (connu sous l'acronyme d'OLTC pour « on line tap changer » en anglais) permettant d'ajuster la tension du réseau à une tension intermédiaire, un deuxième groupe 2 comportant un transformateur redresseur triphasé permettant d'ajuster la tension intermédiaire à la tension hors charge adéquate dépendante de la valeur de la tension de la charge et de délivrer les fortes intensités de courant nécessaires au procédé d'électrolyse, un troisième groupe 3 comportant un redresseur à diodes ou à thyristors permettant de délivrer le courant électrique et la tension redressée à la charge, et un quatrième groupe 4 comportant un jeu de barres de puissance permettant la mise en parallèle des différents groupes et l'alimentation en courant continu d'une installation d'électrolyse ou série d'électrolyse ou tout autre dispositif adéquat.
La figure 2 représente un schéma électrique simplifié de type pont de Graëtz qui détaille l'agencement d'un redresseur dodécaphasé du troisième groupe 3 auquel est relié un transformateur redresseur du deuxième groupe 2. Comme on peut le voir sur cette figure 2, les trois phases $U_\Delta$, $V_\Delta$, $W_\Delta$ d'un premier secondaire alimentent un pont redresseur de polarité positive P+ à six groupes (ou bras) équipés de fusibles et semi-conducteurs et les trois phases $U_Y$, $V_Y$, $W_Y$ d'un deuxième secondaire du transformateur redresseur alimentent un pont redresseur de polarité négative P- à six groupes (ou bras) équipés de fusibles et semi-conducteurs du redresseur, les deux ponts redresseur P+ et P- étant montés en parallèle. Chaque pont redresseur est du type pont de Graëtz. Par ailleurs, chacun des six bras $U_\Delta{}^+$, $V_\Delta{}^+$, $W_\Delta{}^+$, $U_Y{}^+$, $V_Y{}^+$, $W_Y{}^+$ du pont redresseur de polarité positive P+ et des six bras $U_\Delta{}^-$, $V_\Delta{}^-$, $W_\Delta{}^-$, $U_Y{}^-$, $V_Y{}^-$, $W_Y{}^-$ du pont redresseur de polarité négative P- est constitué d'une mise en parallèle de n diodes ou thyristors permettant d'atteindre un calibre en courant souhaité pour le redresseur (zone A de la figure 2). Comme on peut le voir sur cette zone A, chaque diode 5 (ou thyristor) des n diodes (ou thyristors) est montée en série avec un fusible 6 permettant d'éliminer un défaut éventuel et autorisant un fonctionnement continu en cas de défaillance d'une diode ou thyristor.
Le fonctionnement à forte puissance du redresseur entraîne d'importantes contraintes en termes d'équilibrage en courant des bras des ponts redresseur. En effet, pour faire face à une augmentation de la valeur de la tension redressée atteignant typiquement des valeurs de l'ordre de 2200 Vdc, il est nécessaire d'augmenter le nombre n de composants (diodes ou thyristors et fusibles) mis en parallèle. Par exemple, pour un redresseur du type 2200 Vdc/100 kA, il faut prévoir entre 18 et 20 composants en parallèle par bras, ce nombre étant fonction du type de composant et de la sévérité des conditions de fonctionnement. La mise en parallèle d'un nombre croissant de composants entraîne des problèmes d'équilibrage en courant entre les composants d'un bras. Le dimensionnement, donc notamment le nombre et l'encombrement, de l'ensemble des composants du redresseur se faisant par rapport au composant le plus déséquilibré en courant dans un bras, il est nécessaire de pouvoir minimiser le déséquilibre en courant de celui-ci.

On connaît par ailleurs de la demande internationale WO 2012/089751 A1 un redresseur de forte puissance à faible déséquilibre en courant présentant les caractéristiques du préambule de la revendication 1. En outre, il est également connu de la demande de brevet français FR 2 967 317 A1 une architecture de redresseur à diodes/thyristors compacte permettant une grande puissance.

EXPOSÉ DE L'INVENTION

L'invention a pour but de remédier au moins partiellement aux besoins et aux inconvénients mentionnés ci-dessus.

L'invention a notamment pour but d'empêcher, ou au moins de minimiser, le déséquilibre en courant entre des composants d'un convertisseur de forte puissance grâce à une architecture de bras non alignés dans un même plan.

L'invention a ainsi pour objet, selon l'un de ses aspects, un convertisseur de puissance, notamment un redresseur, selon la revendication 1.

Grâce à l'invention, il est possible de réduire le déséquilibre en courant entre des composants d'un même bras d'un convertisseur de puissance. Le dimensionnement étant réalisé en partie par rapport au composant le plus déséquilibré en courant dans un bras, l'invention peut ainsi permettre d'améliorer significativement le dimensionnement des convertisseurs de puissance, et notamment des redresseurs à forte puissance. En outre, le fait d'avoir une architecture non-alignée des bras d'au moins une série de bras de composants peut permettre de réduire l'entraxe entre les bras et d'avoir une architecture plus compacte. De la sorte, l'invention peut permettre d'obtenir un gain en termes d'encombrement et de transport.

Le convertisseur de puissance selon l'invention peut en outre comporter l'une ou plusieurs des caractéristiques suivantes prises isolément ou suivant toutes combinaisons techniques possibles.

Le convertisseur de puissance peut être un redresseur de forte puissance pour l'électrolyse, notamment l'électrolyse de l'aluminium.

Le convertisseur peut être dodécaphasé. Chaque pont convertisseur peut comporter six bras de composants semi-conducteurs et fusibles. En particulier, chaque pont convertisseur peut ainsi comporter une première série de trois bras reliés aux phases du premier secondaire du transformateur et une deuxième série de trois bras reliés aux phases du deuxième secondaire du transformateur.

Au moins une première partie des bras de ladite au moins une série de bras de composants peut comporter des bras alignés dans un premier plan et au moins une deuxième partie des bras de ladite au moins une série de bras de composants peut comporter des bras alignés dans un deuxième plan, les premier et deuxième plans étant sécants.

La valeur maximale du déséquilibre en courant dans un bras donné du pont convertisseur positif et/ou du pont convertisseur négatif peut être inférieure ou égale à 11 %, ou du moins réduite de 5 % par rapport aux solutions de l'art antérieur, cette valeur maximale ($dI_{max}$) étant déterminée par la formule suivante :

$$dImax = 100 \ x \ \frac{Imax \ d'un \ composant \ dans \ le \ bras - Imoyen \ de \ tous \ les \ composants \ dans \ le \ bras}{Imoyen \ de \ tous \ les \ composants \ dans \ le \ bras}$$

Chaque diode ou thyristor peut être monté en série avec un fusible. Ainsi, chaque bras du pont convertisseur positif et/ou du pont convertisseur négatif peut comporter n fusibles associés à n diodes ou thyristors montés en parallèle.

La distance qui sépare deux bras consécutifs de ladite au moins une série de bras de composants peut être supérieure à la distance qui séparerait ces deux bras consécutifs dans toute configuration où les bras de ladite au moins une série de bras de composants seraient disposés les uns par rapport aux autres de sorte à être alignés dans un même plan.

La distance qui sépare un premier bras d'un troisième bras, les premier et troisième bras étant situés de part et d'autre d'un deuxième bras et les premier et deuxième bras d'une part et les deuxième et troisième bras d'autre part étant notamment adjacents, de ladite au moins une série de bras de composants peut être inférieure à la distance qui séparerait ces premier et troisième bras dans toute configuration où les premier, deuxième et troisième bras de ladite au moins une série de bras de composants seraient disposés les uns par rapport aux autres de sorte à être alignés dans un même plan.

L'invention a encore pour objet, selon un autre de ses aspects, un circuit convertisseur de forte puissance, notamment pour une installation d'usine d'électrolyse, caractérisé en ce qu'il comporte :

- un transformateur comportant un premier secondaire et un deuxième secondaire,
- un convertisseur de puissance tel que défini précédemment.

Le transformateur peut être un transformateur redresseur et le convertisseur de puissance peut être un redresseur de forte puissance, notamment pour l'électrolyse.

Le circuit convertisseur selon l'invention peut comporter l'une quelconque des caractéristiques précédemment énoncées, prises isolément ou selon toutes combinaisons techniquement possibles avec d'autres caractéristiques.

**BRÈVE DESCRIPTION DES DESSINS**

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :

- la figure 1 représente un exemple de circuit redresseur d'une installation d'usine d'électrolyse,
- la figure 2 représente de façon plus détaillée le transformateur redresseur et le redresseur du circuit redresseur de la figure 1,
- la figure 3 illustre, en perspective, l'agencement selon l'art antérieur de bras d'un redresseur de forte puissance,
- la figure 4 illustre, en vue du dessus ou coupe transversale, l'agencement des bras du redresseur de la figure 3,
- la figure 5 illustre, en perspective, l'agencement selon l'invention de bras d'un redresseur de forte puissance, et
- la figure 6 illustre, en vue du dessus ou coupe transversale, l'agencement des bras du redresseur de la figure 5.

Dans l'ensemble de ces figures, des références identiques peuvent désigner des éléments identiques ou analogues.

**EXPOSÉ DÉTAILLÉ D'UN MODE DE RÉALISATION PARTICULIER**

Dans la description des figures qui va suivre, le convertisseur de puissance 3 est un redresseur de forte puissance pour l'électrolyse de l'aluminium. Le redresseur 3 peut être semblable à celui représenté sur le schéma électrique de la figure 2 décrite précédemment.

En particulier, le redresseur 3 est dodécaphasé et comporte un pont redresseur de polarité positive P+ et un pont redresseur de polarité négative P-comportant chacun six bras de composants semi-conducteurs.

Les ponts convertisseur positif P+ et négatif P- peuvent être assimilés à un même pont convertisseur destiné à être relié aux phases d'un premier secondaire ($U_\Delta$, $V_\Delta$, $W_\Delta$), ce pont convertisseur comportant trois bras reliés à la polarité positive ($U_\Delta^+$, $V_\Delta^+$, $W_\Delta^+$) et trois autres bras reliés à la polarité négative ($U_\Delta^-$, $V_\Delta^-$, $W_\Delta^-$).

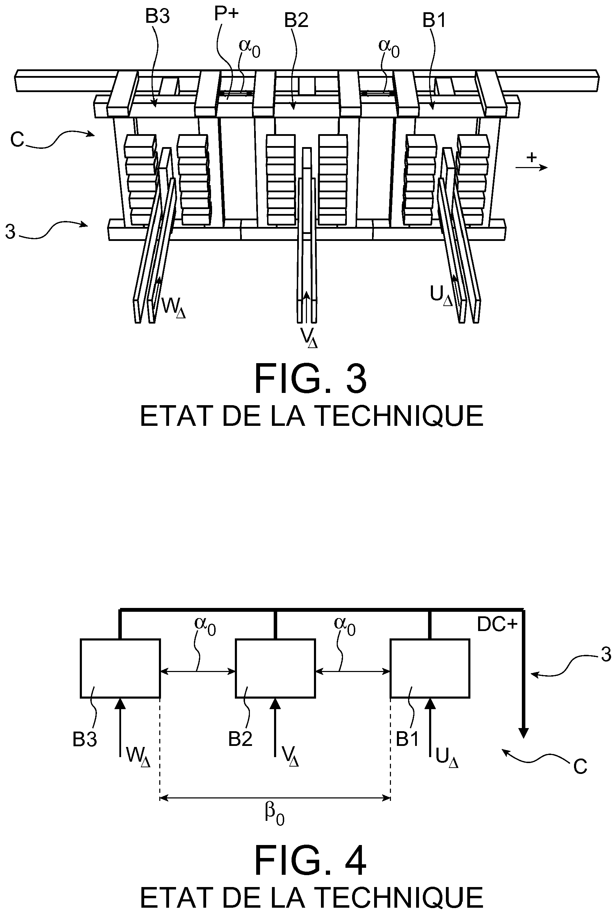

Les figures 3 à 6 illustrent la disposition des trois bras B1, B2, B3 de la première série $U_\Delta^+$, $V_\Delta^+$, $W_\Delta^+$ du pont redresseur, représentée par la zone C sur la figure 2.

Bien entendu, l'ensemble des choix mentionnés ci-dessus n'est pas limitatif. En particulier, la configuration spatiale (ou architecture) des trois bras B1, B2, B3 reliés à $U_\Delta^+$, $V_\Delta^+$, $W_\Delta^+$ peut être différente. De plus, les trois bras reliés à $U_Y^+$, $V_Y^+$, $W_Y^+$, les trois bras reliés à $U_\Delta^-$, $V_\Delta^-$, $W_\Delta^-$ et/ou les trois bras reliés à $U_Y^-$, $V_Y^-$, $W_Y^-$ peuvent également présenter une disposition non-alignée, semblable ou non à celle décrite pour les trois bras B1, B2 et B3.

En référence aux figures 3 et 4, on a représenté l'architecture classique selon l'art antérieur des trois bras B1, B2, B3 (zone C de la figure 2).

Chaque bras B1, B2, B3 comporte n composants montés en parallèle et reliés en entrée aux trois phases alternatives $U_\Delta$, $V_\Delta$, $W_\Delta$ du transformateur redresseur 2 et en sortie à la polarité positive du redresseur.

Comme on peut le voir sur la figure 3 en perspective et sur la figure 4 en coupe transversale, les trois bras B1, B2, B3 sont alignés dans un même plan.

Des essais réalisés à partir de cette architecture où les trois bras B1, B2, B3 sont alignés, avec un courant continu de l'ordre de 20 kA, ont permis de déterminer un déséquilibre maximum $dI_{max}$ en courant dans un bras de l'ordre de 16 %.

Le déséquilibre maximum $dI_{max}$ en courant dans un bras est calculé par la formule suivante :

$$dImax = 100 \text{ x } \frac{\text{Imax d'un composant dans le bras - Imoyen de tous les composants dans le bras}}{\text{Imoyen de tous les composants dans le bras}}$$

Un déséquilibre maximum $dI_{max}$ de l'ordre de 16 % signifie qu'au moins un composant est parcouru par 16 % de courant en plus que la moyenne du courant dans le bras auquel il appartient. En particulier, ce composant présentant le plus grand déséquilibre en courant se situe sur le bras central B2.

Une telle réalisation selon l'art antérieur avec des bras alignés n'est pas entièrement satisfaisante car elle nécessite de dimensionner l'ensemble des composants constituant le redresseur, soit 240 composants pour un redresseur à 20 composants par bras par exemple, par rapport à celui qui est le plus déséquilibré en courant, c'est-à-dire celui présentant un déséquilibre de 16 %.

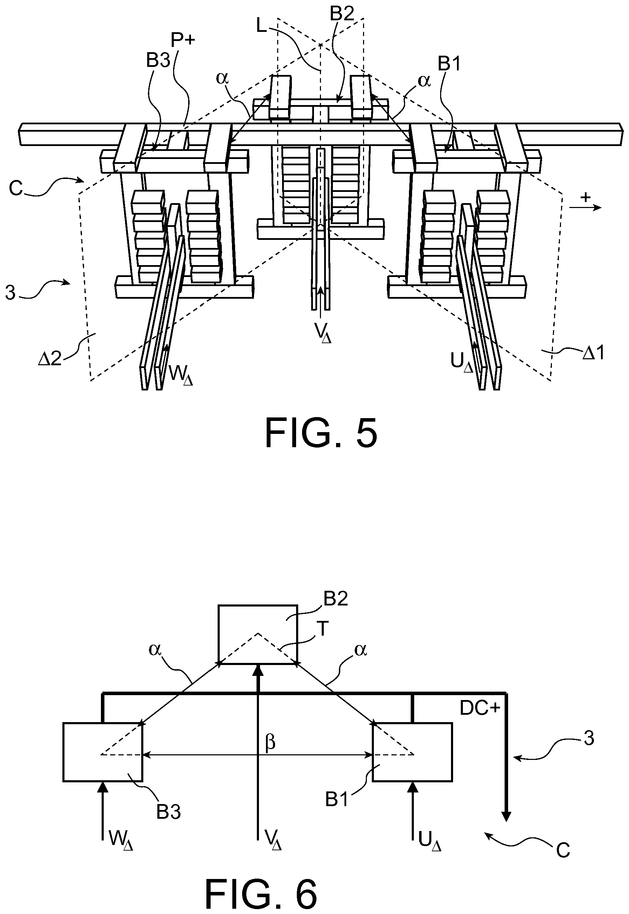

Les figures 5 et 6 représentent, respectivement en perspective et en coupe transversale, l'agencement des bras B1, B2 et B3 conformément à l'invention.

Les bras B1, B2 et B3 sont disposés, comme on peut le voir sur ces figures, de façon non-alignée dans un même plan. En particulier, comme on peut le voir sur la figure 6, les bras B1, B2 et B3 définissent en coupe transversale les sommets d'un triangle T.

En outre, comme on peut le voir sur la figure 5, une première partie des bras comportant le premier bras B1 et le deuxième bras B2 sont alignés dans un premier plan $\Delta 1$ et une deuxième partie des bras comportant le deuxième bras B2 et le troisième bras B3 sont alignés dans un deuxième plan $\Delta 2$, les premier $\Delta 1$ et deuxième $\Delta 2$ plans étant séquants au niveau d'une droite L.

La distance $\alpha$ qui sépare les deux bras consécutifs B1 et B2 et les deux bras consécutifs B2 et B3 est supérieure à la distance $\alpha_0$ qui sépare ces mêmes deux bras consécutifs B1 et B2, et B2 et B3, dans la configuration où les bras B1, B2 et B3 sont alignés dans un même plan, comme représenté sur la figure 4.

En particulier, la distance $\alpha$ peut être supérieure ou égale à 500 mm.

La disposition non-alignée des bras du redresseur selon l'invention peut ainsi permettre d'augmenter la distance $\alpha$ entre les bras, favorisant le passage de maintenance.

Or, il a pu être observé qu'il existe une influence non négligeable, d'un bras sur l'autre, du champ magnétique généré lors des commutations de composants. Aussi, en augmentant la distance $\alpha$ entre les bras, l'influence du champ magnétique est diminuée et les composants des bras sont moins perturbés par les champs magnétiques générés par ceux des autres bras.

Par ailleurs, la distance $\beta$ qui sépare le premier bras B1 du troisième bras B3, les premier B1 et troisième B3 bras étant situés de part et d'autre du deuxième bras B2, est inférieure à la distance $\beta_0$ qui sépare ces premier B1 et troisième B3 bras dans la configuration où les trois bras B1, B2 et B3 sont alignés, comme représenté sur la figure 4. En effet, le fait d'avoir une architecture non-alignée selon l'invention permet de réduire la distance $\beta$ qui sépare les deux bras extrêmes B1 et B3 de la série de bras, tout en permettant une augmentation de la distance $\alpha$ qui sépare deux bras consécutifs, ce qui permet ainsi de prévoir une architecture plus compacte pour le redresseur et d'entraîner un gain en termes d'encombrement et de transport, tout en maintenant un accès pour la maintenance.

Des essais réalisés avec l'architecture selon l'invention des figures 5 et 6, avec un courant continu de l'ordre de 20 kA, ont permis de déterminer un déséquilibre maximum $dI_{max}$ en courant dans un bras d'environ 11 %.

Autrement dit, au moins un composant est parcouru par 11 % de courant en plus que la moyenne du courant dans le bras auquel il appartient.

Le désalignement des bras B1, B2 et B3 et l'augmentation de la distance $\alpha$ entre les bras permettent donc de diminuer le déséquilibre maximum $dI_{max}$ en courant du redresseur, facilitant ainsi le dimensionnement du redresseur.

Bien entendu, l'invention n'est pas limitée à l'exemple de réalisation qui vient d'être décrit. Diverses modifications peuvent y être apportées par l'homme du métier.

L'expression « comportant un » doit être comprise comme étant synonyme de « comportant au moins un », sauf si le contraire est spécifié.

**Revendications**

1. Convertisseur de puissance (3) comportant :

   - un pont convertisseur positif (P+) destiné à être relié aux phases d'un premier secondaire ($U_\Delta$, $V_\Delta$, $W_\Delta$) et aux phases d'un deuxième secondaire ($U_Y$, $V_Y$, $W_Y$) d'un transformateur (2),
   - un pont convertisseur négatif (P-) destiné à être relié aux phases du premier secondaire ($U_\Delta$, $V_\Delta$, $W_\Delta$) et aux phases du deuxième secondaire ($U_Y$, $V_Y$, $W_Y$) du transformateur (2),

   le pont convertisseur positif (P+) et le pont convertisseur négatif (P-) étant du type pont de Graëtz et étant montés en parallèle,
   chaque pont convertisseur (P+ ; P-) comportant une première série de groupes de composants ($U_\Delta^+$, $V_\Delta^+$, $W_\Delta^+$; $U_\Delta^-$, $V_\Delta^-$, $W_\Delta^-$) semi-conducteurs et fusibles reliés aux phases du premier secondaire ($U_\Delta$, $V_\Delta$, $W_\Delta$) du transformateur (2) et une deuxième série de groupes de composants ($U_Y^+$, $V_Y^+$, $W_Y^+$; $U_Y^-$, $V_Y^-$, $W_Y^-$) semi-conducteurs et fusibles reliés aux phases du deuxième secondaire du transformateur (2),
   **caractérisé en ce qu'**au moins une série de groupes de composants ($U_\Delta^+$, $V_\Delta^+$, $W_\Delta^+$) comporte des bras (B1, B2, B3), constitué chacun par une mise en parallèle de plusieurs diodes et/ou thyristors (5),
   **en ce qu'**au moins une première partie (B1, B2) des bras de ladite au moins une série de groupes de composants ($U_\Delta^+$, $V_\Delta^+$, $W_\Delta^+$) comporte des bras alignés dans un premier plan ($\Delta 1$) et au travers desquels passe le premier plan

($\Delta$1),

**en ce qu'**au moins une deuxième partie (B2, B3) des bras de ladite au moins une série de groupes de composants ($U_\Delta^+$, $V_\Delta^+$, $W_\Delta^+$) comporte des bras alignés dans un deuxième plan ($\Delta$2) et au travers desquels passe le deuxième plan ($\Delta$2),

le premier plan ($\Delta$1) et le deuxième plan ($\Delta$2) étant sécants au niveau d'une droite (L),

la droite (L) s'étendant perpendiculairement à l'un (P+) au moins du pont convertisseur positif (P+) et du pont convertisseur négatif (P-) comprenant ladite au moins une série de groupes de composants ($U_\Delta^+$, $V_\Delta^+$, $W_\Delta^+$) ,

les bras (B1, B2) de ladite au moins une première partie (B1, B2) des bras et les bras (B2, B3) de ladite au moins une deuxième partie (B2, B3) des bras s'étendant parallèlement les uns par rapport aux autres et parallèlement à la droite (L),

les bras (B1, B2, B3) étant ainsi disposés les uns par rapport aux autres de sorte à être non-alignés dans un même plan transversal à la droite (L), et **en ce que** les bras (B1, B2, B3) de ladite au moins une série de groupes de composants ($U_\Delta^+$, $V_\Delta^+$, $W_\Delta^+$) définissent, lorsqu'observés en coupe transversale, les sommets d'un triangle isocèle, la valeur maximale ($dI_{max}$) du déséquilibre en courant dans un groupe donné du pont convertisseur positif (P+) et/ou du pont convertisseur négatif (P-) étant inférieure ou égale à 15 %, cette valeur maximale ($dI_{max}$) étant déterminée par la formule suivante :

$$dImax = 100 \text{ x } \frac{\text{Imax d'un composant dans le groupe - Imoyen de tous les composants dans le groupe}}{\text{Imoyen de tous les composants dans le groupe}}$$

.

2. Convertisseur de puissance selon la revendication 1, **caractérisé en ce qu'**il est un redresseur de forte puissance pour l'électrolyse.

3. Convertisseur de puissance selon la revendication 1 ou 2, **caractérisé en ce qu'**il est dodécaphasé et **en ce que** chaque pont convertisseur (P+ ; P-) comporte six groupes de composants semi-conducteurs et fusibles, à savoir une première série de trois groupes ($U_\Delta^+$, $V_\Delta^+$, $W_\Delta^+$; $U_\Delta^-$, $V_\Delta^-$, $W_\Delta^-$) reliés aux phases du premier secondaire ($U_\Delta$, $V_\Delta$, $W_\Delta$) du transformateur (2) et une deuxième série de trois groupes ($U_Y^+$, $V_Y^+$, $W_Y^+$; $U_Y^-$, $V_Y^-$, $W_Y^-$) reliés aux phases du deuxième secondaire ($U_Y$, $V_Y$, $W_Y$) du transformateur (2).

4. Convertisseur de puissance selon l'une quelconque des revendications précédentes, **caractérisé en ce que** la valeur maximale ($dI_{max}$) du déséquilibre en courant dans un groupe donné du pont convertisseur positif (P+) et/ou du pont convertisseur négatif (P-) est inférieure ou égale à 11 %, notamment réduite de 5 %.

5. Convertisseur de puissance selon l'une quelconque des revendications précédentes, **caractérisé en ce que** chaque diode ou thyristor (5) est monté en série avec un fusible (6).

6. Convertisseur de puissance selon l'une quelconque des revendications précédentes, **caractérisé en ce que** la distance ($\alpha$) qui sépare deux bras (B1, B2 ; B2, B3) consécutifs de ladite au moins une série de groupes de composants ($U_\Delta^+$, $V_\Delta^+$, $W_\Delta^+$) est supérieure à la distance ($\alpha_0$) qui séparerait ces deux bras consécutifs dans toute configuration où les bras (B1, B2, B3) de ladite au moins une série de groupes de composants ($U_\Delta^+$, $V_\Delta^+$, $W_\Delta^+$) seraient disposés les uns par rapport aux autres de sorte à être alignés dans un même plan.

7. Convertisseur de puissance selon l'une quelconque des revendications précédentes, **caractérisé en ce que** la distance ($\beta$) qui sépare un premier bras (B1) d'un troisième bras (B3), les premier (B1) et troisième (B3) bras étant situés de part et d'autre d'un deuxième bras (B2), de ladite au moins une série de groupes de composants ($U_\Delta^+$, $V_\Delta^+$, $W_\Delta^+$) est inférieure à la distance ($\beta_0$) qui séparerait ces premier (B1) et troisième (B3) bras dans toute configuration où les premier, deuxième et troisième bras (B1, B2, B3) de ladite au moins une série de groupes de composants ($U_\Delta^+$, $V_\Delta^+$, $W_\Delta^+$) seraient disposés les uns par rapport aux autres de sorte à être alignés dans un même plan.

8. Circuit convertisseur de forte puissance (10) **caractérisé en ce qu'**il comporte :

   - un transformateur (2) comportant un premier secondaire ($U_\Delta$, $V_\Delta$, $W_\Delta$) et un deuxième secondaire ($U_Y$, $V_Y$, $W_Y$),
   - un convertisseur de puissance (3) selon l'une quelconque des revendications précédentes.

**Patentansprüche**

1. Leistungswandler (3) aufweisend:

   - eine positive Wandlerbrücke (P+), die dazu bestimmt ist, an die Phasen einer ersten Sekundärwicklung ($U_\Delta$, $V_\Delta$, $W_\Delta$) und an die Phasen einer zweiten Sekundärwicklung ($U_y$, $V_y$, $W_y$) eines Transformators (2) angeschlossen zu werden;
   - eine negative Wandlerbrücke (P-), die dazu bestimmt ist, an die Phasen der ersten Sekundärwicklung ($U_\Delta$, $V_\Delta$, $W_\Delta$) und an die Phasen der zweiten Sekundärwicklung ($U_y$, $V_y$, $W_y$) des Transformators (2) angeschlossen zu werden;

   wobei die positive Wandlerbrücke (P+) und die negative Wandlerbrücke (P-) vom Graëtz-Brückentyp und parallel angebracht sind,
   wobei jede Wandlerbrücke (P+; P-) eine erste Reihe von Gruppen von Halbleiterkomponenten ($U_\Delta^+$, $V_\Delta^+$, $W_\Delta^+$; $U_\Delta^-$, $V_\Delta^-$, $W_\Delta^-$) und Sicherungen, die an die Phasen der ersten Sekundärwicklung ($U_\Delta$, $V_\Delta$, $W_\Delta$) des Transformators (2) angeschlossen sind, und eine zweite Reihe von Gruppen von Halbleiterkomponenten ($U_Y^+$, $V_Y^+$, $W_Y^+$; $U_Y^-$, $V_Y^-$, $W_Y^-$) und Sicherungen aufweist, die an den Phasen der zweiten Sekundärwicklung des Transformators (2) angeschlossen sind,
   **dadurch gekennzeichnet, dass** mindestens eine Reihe von Komponenten ($U_\Delta^+$, $V_\Delta^+$, $W_\Delta^+$) Arme (B1, B2, B3) aufweist, die jeweils aus einer Parallelschaltung mehrerer Dioden und/oder Thyristoren (5) bestehen,
   dass mindestens ein erster Teil (B1, B2) der Arme der mindestens einen Reihe von Gruppen von Komponenten ($U_\Delta^+$, $V_\Delta^+$, $W_\Delta^+$) Arme aufweist, die in einer ersten Ebene ($\Delta1$) ausgerichtet sind und durch die die erste Ebene ($\Delta1$) verläuft,
   dass mindestens ein zweiter Teil (B2, B3) der Arme der mindestens einen Reihe von Gruppen von Komponenten ($U_\Delta^+$, $V_\Delta^+$, $W_\Delta^+$) Arme aufweist, die in einer zweiten Ebene ($\Delta2$) ausgerichtet sind und durch die die zweite Ebene ($\Delta2$) verläuft,

   wobei die erste Ebene ($\Delta1$) und die zweite Ebene ($\Delta2$) sich in einer Geraden (L) schneiden,
   wobei sich die Gerade (L) senkrecht zu mindestens einer (P+) der positiven Wandlerbrücke (P+) und der negativen Wandlerbrücke (P-) erstreckt, die die mindestens eine Reihe von Gruppen von Komponenten ($U_\Delta^+$, $V_\Delta^+$, $W_\Delta^+$) umfasst,
   wobei die Arme (B1, B2) des mindestens einen ersten Teils (B1, B2) der Arme und die Arme (B2, B3) des mindestens einen zweiten Teils (B2, B3) der Arme sich relativ zueinander parallel und parallel zu der Geraden (L) erstrecken,
   wobei die Arme (B1, B2, B3) somit zueinander so angeordnet sind, dass sie nicht in derselben Ebene quer zu der Geraden (L) ausgerichtet sind, und dass die Arme (B1, B2, B3) mindestens einer Reihe von Gruppen von Komponenten ($U_\Delta^+$, $V_\Delta^+$, $W_\Delta^+$) die Eckpunkte eines gleichschenkligen Dreiecks definieren, wenn sie im Querschnitt betrachtet werden,
   wobei der Maximalwert ($dI_{max}$) des Stromungleichgewichts in einer gegebenen Gruppe der positiven Wandlerbrücke (P+) und/oder der negativen Wandlerbrücke (P-) kleiner oder gleich 15 % ist, wobei dieser Maximalwert ($dI_{max}$) durch die folgende Formel bestimmt ist:

$$dImax = 100 \times \frac{\text{Imittel von einer Komponente in der Gruppe - Imittel von allen Komponenten in der Gruppe}}{\text{Imittel von allen Komponenten in der Gruppe}}$$

2. Leistungswandler nach Anspruch 1, **dadurch gekennzeichnet, dass** es sich um einen Hochleistungsgleichrichter für die Elektrolyse handelt.

3. Leistungswandler nach Anspruch 1 oder 2, **dadurch gekennzeichnet, dass** er zwölfphasig ist, und dass jede Wandlerbrücke (P+; P-) sechs Gruppen von Halbleiterkomponenten und Sicherungen, nämlich eine erste Reihe von drei Gruppen ($U_\Delta^+$, $V_\Delta^+$, $W_\Delta^+$; $U_\Delta^-$, $V_\Delta^-$, $W_\Delta^-$), die an die Phasen der ersten Sekundärwicklung ($U_\Delta$, $V_\Delta$, $W_\Delta$) des Transformators (2) angeschlossen sind, und eine zweite Reihe von drei Gruppen ($U_Y^+$, $V_Y^+$, $W_Y^+$; $U_Y^-$, $V_Y^-$, $W_Y^-$) aufweist, die an den Phasen der zweiten Sekundärwicklung ($U_Y$, $V_Y$, $W_Y$) des Transformators (2) angeschlossen sind.

4. Leistungswandler nach einem der vorhergehenden Ansprüche, **dadurch gekennzeichnet, dass** der Maximalwert ($dI_{max}$) des Stromungleichgewichts in einer gegebenen Gruppe der positiven Wandlerbrücke (P+) und/oder der negativen Wandlerbrücke (P-) niedriger oder gleich 11 % ist, insbesondere um 5 % verringert ist.

5. Leistungswandler nach einem der vorhergehenden Ansprüche, **dadurch gekennzeichnet, dass** jede Diode oder jeder Thyristor (5) mit einer Sicherung (6) in Reihe angebracht ist.

6. Leistungswandler nach einem der vorhergehenden Ansprüche, **dadurch gekennzeichnet, dass** der Abstand (a), der zwei aufeinanderfolgende Arme (B1, B2; B2, B3) von der mindestens einen Reihe von Gruppen von Komponenten ($U_\Delta{}^+$, $V_\Delta{}^+$, $W_\Delta{}^+$) trennt, größer als der Abstand ($\alpha_0$) ist, der diese beiden aufeinanderfolgenden Arme in jeder Konfiguration trennen würde, in der die Arme (B1, B2, B3) der mindestens einen Reihe von Gruppen von Komponenten ($U_\Delta{}^+$, $V_\Delta{}^+$, $W_\Delta{}^+$) relativ zueinander so angeordnet wären, um in derselben Ebene ausgerichtet zu sein.

7. Leistungswandler nach einem der vorhergehenden Ansprüche, **dadurch gekennzeichnet, dass** der Abstand ($\beta$) der mindestens einen Reihe von Gruppen von Komponenten ($U_\Delta{}^+$, $V_\Delta{}^+$, $W_\Delta{}^+$), der einen ersten Arm (B1) von einem dritten Arm (B3) trennt, wobei sich der erste (B1) und der dritte (B3) Arm auf beiden Seiten eines zweiten Arms (B2) befinden, kleiner als der Abstand ($\beta_0$) ist, der diesen ersten (B1) und dritten (B3) Arm in jeder Konfiguration trennen würde, in der der erste, zweite und dritte Arm (B1, B2, B3) der mindestens einen Reihe von Gruppen von Komponenten ($U_\Delta{}^+$, $V_\Delta{}^+$, $W_\Delta{}^+$) relativ zueinander so angeordnet wären, um in derselben Ebene ausgerichtet zu sein.

8. Hochleistungswandlerschaltung (10), **dadurch gekennzeichnet, dass** sie aufweist:

- einen Transformator (2), der eine erste Sekundärwicklung ($U_\Delta$, $V_\Delta$, $W_\Delta$) und eine zweite Sekundärwicklung ($U_y$, $V_y$, $W_y$) aufweist,
- einen Leistungswandler (3) nach einem der vorhergehenden Ansprüche.

## Claims

1. Power converter (3) comprising:

- a positive converter bridge (P+) intended to be connected to the phases of a first secondary ($U_\Delta$, $V_\Delta$, $W_\Delta$) and to the phases of a second secondary ($U_Y$, $V_Y$, $W_Y$) of a transformer (2),
- - a negative converter bridge (P-) intended to be connected to the phases of the first secondary ($U_\Delta$, $V_\Delta$, $W_\Delta$) and to the phases of the second secondary ($U_Y$, $V_Y$, $W_Y$) of the transformer (2),

the positive converter bridge (P+) and the negative converter bridge (P-) being of the Graëtz bridge type and being assembled in parallel,
each converter bridge (P+; P-) comprising a first series of groups of semi-conductor components ($U_\Delta{}^+$, $V_\Delta{}^+$, $W_\Delta{}^+$; $U_\Delta{}^-$, $V_\Delta{}^-$, $W_\Delta{}^-$) and fuses connected to the phases of the first secondary ($U_\Delta$, $V_\Delta$, $W_\Delta$) of the transformer (2) and a second series of groups of semi-conductor components ($U_Y{}^+$, $V_Y{}^+$, $W_Y{}^+$; $U_Y{}^-$, $V_Y{}^-$, $W_Y{}^-$) and fuses connected to the phases of the second secondary of the transformer (2),
**characterised in that** at least one series of groups of components ($U_\Delta{}^+$, $V_\Delta{}^+$, $W_\Delta{}^+$) comprises arms (B1, B2, B3), each one formed by putting of several diodes and/or thyristors (5) in parallel,
**in that** at least one first portion (B1, B2) of the arms of said at least one series of groups of components ($U_\Delta{}^+$, $V_\Delta{}^+$, $W_\Delta{}^+$) comprises arms aligned in a first plane ($\Delta 1$) and through which passes the first plane ($\Delta 1$),
**in that** at least one second portion (B2, B3) of the arms of said at least one series of groups of components ($U_\Delta{}^+$, $V_\Delta{}^+$, $W_\Delta{}^+$) comprises arms aligned in a second plane ($\Delta 2$) and through which passes the second plane ($\Delta 2$),
the first plane ($\Delta 1$) and the second plane ($\Delta 2$) being secant on a straight line (L),
the straight line (L) extending perpendicularly to one (P+) at least of the positive converter bridge (P+) and of the negative converter bridge (P-) comprising said at least one series of groups of components ($U_\Delta{}^+$, $V_\Delta{}^+$, $W_\Delta{}^+$), the arms (B1, B2) of said at least one first portion (B1, B2) of the arms and the arms (B2, B3) of said at least one second portion (B2, B3) of the arms extending parallel relative to one another and parallel to the straight line (L),
the arms (B1, B2, B3) being thus arranged relative to one another such that they are nonaligned in the same plane transversal to the straight line (L), and **in that** the arms (B1, B2, B3) of said at least one series of groups of components ($U_\Delta{}^+$, $V_\Delta{}^+$, $W_\Delta{}^+$) define, when observed as a cross-section, the vertices of an isosceles triangle,
the maximum value ($dI_{max}$) of the current imbalance in a given group of the positive converter bridge (P+) and/or of the negative converter bridge (P-) being less than or equal to 15%, this maximum value ($dI_{max}$) being determined by the following formula:

$$dImax = 100 \text{ x } \frac{\text{Imax of a component in the group} - \text{Iaverage of all the components in the group}}{\text{Iaverage of all the components in the group}}$$

2. Power converter according to claim 1, **characterised in that** it is a high-power rectifier for electrolysis.

3. Power converter according to claim 1 or 2, **characterised in that** it is a 12-pulse power converter and **in that** each converter bridge (P+; P-) comprises six groups of semi-conductor components and fuses, namely a first series of three groups ($U_\Delta^+$, $V_\Delta^+$, $W_\Delta^+$; $U_\Delta^-$, $V_\Delta^-$, $W_\Delta^-$) connected to the phases of the first secondary ($U_\Delta$, $V_\Delta$, $W_\Delta$) of the transformer (2) and a second series of three groups ($U_Y^+$, $V_Y^+$, $W_Y^+$; $U_Y^-$, $V_Y^-$, $W_Y^-$) connected to the phases of the second secondary ($U_Y$, $V_Y$, $W_Y$) of the transformer (2).

4. Power converter according to any preceding claim, **characterised in that** the maximum value ($dI_{max}$) of the current imbalance in a given group of the positive converter bridge (P+) and/or of the negative converter bridge (P-) is less than or equal to 11%, in particular reduced to 5%.

5. Power converter according to any preceding claim, **characterised in that** each diode or thyristor (5) is assembled in series with a fuse (6).

6. Power converter according to any preceding claim, **characterised in that** the distance ($\alpha$) that separates two consecutive arms (B1, B2; B2, B3) from said at least one series of groups of components ($U_\Delta^+$, $V_\Delta^+$, $W_\Delta^+$) is greater than the distance ($\alpha_0$) that would separate these two consecutive arms in any configuration where the arms (B1, B2, B3) of said at least one series of groups of components ($U_\Delta^+$, $V_\Delta^+$, $W_\Delta^+$) would be arranged relative to one another such as to be aligned in the same plan.

7. Power converter according to any preceding claim, **characterised in that** the distance ($\beta$) that separate a first arm (B1) from a third arm (B3), the first (B1) and third (B3) arms being situated on either side of a second arm (B2), of said at least one series of groups of components ($U_\Delta^+$, $V_\Delta^+$, $W_\Delta^+$) is less than the distance ($\beta_0$) that would separate these first (B1) and third (B3) arms in any configuration where the first, second and third arms (B1, B2, B3) of said at least one series of groups of components ($U_\Delta^+$, $V_\Delta^+$, $W_\Delta^+$) would be arranged relative to one another such as to be aligned in the same plan.

8. High-power converter circuit (10) **characterised in that** it comprises:

- - a transformer (2) comprising a first secondary ($U_\Delta$, $V_\Delta$, $W_\Delta$) and a second secondary ($U_Y$, $V_Y$, $W_Y$),
- - a power converter (3) according to any preceding claim.

FIG. 1

FIG. 2

## FIG. 3
### ETAT DE LA TECHNIQUE

## FIG. 4
### ETAT DE LA TECHNIQUE

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012089751 A1
- FR 2967317 A1